# EUROPEAN PATENT SPECIFICATION

(11) **EP 2 688 456 B1**
(45) Date of publication and mention of the grant of the patent: **02.03.2016**
(21) Application number: 11725012.6
(22) Date of filing: 24.05.2011
(51) Int. Cl.: A47L 23/26, A47L 23/24

(54) **Floor Mat**
Fussmatte
Tapis de sol

(43) Date of publication of application: 29.01.2014
(73) Proprietor: Verimpex Group NV, 8000 Brugge (BE)
(72) Inventor: D'HONT, Marc, B-8310 Brugge (BE)
(74) Representative: Pronovem
(86) International application number: PCT/EP2011/058503
(87) International publication number: WO 2012/159670

(56) References cited:
- EP-A1- 0 507 415
- DE-U1- 8 535 896
- NL-C2- 1 031 327
- US-A- 3 555 762

## Description

### Field of the Invention

The present invention is related to floor mats, primarily to be placed at the entrance of a building for allowing entrants to wipe the soles of their shoes. The invention is in particular related to mats comprising elongate profiles with tufts or brushes fitted into said profiles, said profiles being connected together to form a mat surface.

### State of the art.

In floor mats of the type described above, it is important to evacuate water as quickly and efficiently as possible. In many cases, the mat profiles are provided with tufts or brushes which are fixed into holes or cavities provided in the profiles. In wet weather conditions, significant amounts of water can become accumulated in the holes or cavities, leading to brushes or tufts becoming saturated with water, thereby deteriorating the effectiveness of the mat.

The document EP 0 507 415 A1 describes a floor mat according to the preamble of claim 1.

### Summary of the invention

The invention is related to a mat as described in the appended claims. This mat provides a solution to the above described problem of water saturation.

The invention is thus related to a floor mat comprising a plurality of interconnected profiles placed side by side to form the surface of the mat, each profile comprising one or more brushes or tufts inserted in the top surface of the profile, wherein each profile comprises an elongate cavity extending in the longitudinal direction of the profile, said cavity being open towards the underside of the profile, said cavity comprising one or more capillary channels oriented in said longitudinal direction, said channel(s) being in contact with said brushes or tufts.

Each profile comprises at least one row of interspaced tufts inserted into holes in the profile, wherein all of the tufts in said row are in contact with a capillary channel.

Alternatively to the tufts, each profile (1) comprises at least one row of interspaced brushes inserted into cavities in the profile, wherein all of the brushes in said row are in contact with a capillary channel. In a floor mat according to the invention, said profiles may be made of PVC-U.

A mat according to the invention may further comprise an elongate cover provided over the top and side surfaces of each of the profiles, said cover having an interior surface that corresponds to the profile's outer surface, said cover further comprising holes or cavities corresponding to the holes or cavities in the profile, for passage of said tufts or brushes through the holes or cavities of the cover.

According to an embodiment, the cover further comprises elongate strips on the inner side walls of the cover, and the corresponding profile comprises elongate grooves in the exterior side walls of the profile, so that said strips may fit into said grooves when the cover and profile are assembled together. The cover can be made of aluminium.

In a floor mat according to the invention, said profiles may be connected together by one or more cables threaded laterally through the profiles, and with spacers being placed in between the profiles, said cables equally being threaded through said spacers.

In a mat according to the invention, said profiles or said covers can be provided with a longitudinal scraper on their top surface.

The profile for forming a floor mat comprising a plurality of interconnected profiles placed side by side to form the surface of the mat comprises one or more openings in the profile's top surface, said one or more openings being arranged in the longitudinal direction of the profile, said opening(s) being suitable for receiving tufts or brushes inserted therein, and an elongate cavity extending in the longitudinal direction of the profile, said cavity being open towards the underside of the profile, said cavity comprising one or more capillary channels oriented in said longitudinal direction, each of said one or more openings being in direct contact with a capillary channel.

Said one or more openings may be holes arranged in one or more rows, the holes of each row being in contact with a capillary channel.

### Brief deseription of the figures

Figure 1a shows a cross-section and a 3D-view of a mat profile. Figure 1b shows the position of the holes for receiving tufts, in a profile.
Figure 2a shows a cross-section of the profile of fig. 1, provided with tufts, a cable for connection to neighbouring profiles, and spacers for separation between neighbouring profiles. Figure 2b shows a detail of the profile of figure 2a, with a different view on the position of the staple.
Figure 3 shows the cross section of a profile further provided with a cover profile.

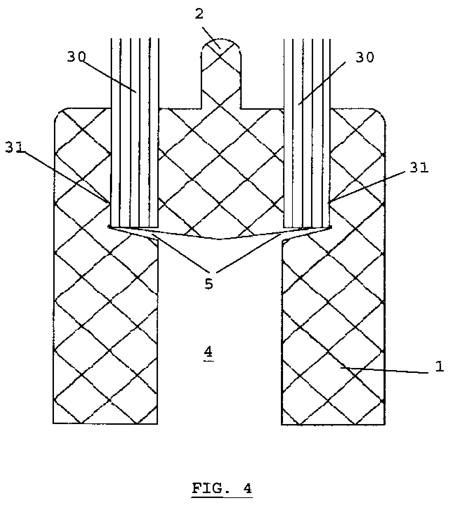

Figure 4 shows an embodiment of a profile, configured to receive brushes instead of tufts.
Figure 5 shows an example of the dimensions of the capillary channels in a profile.

### Detailed description of the invention

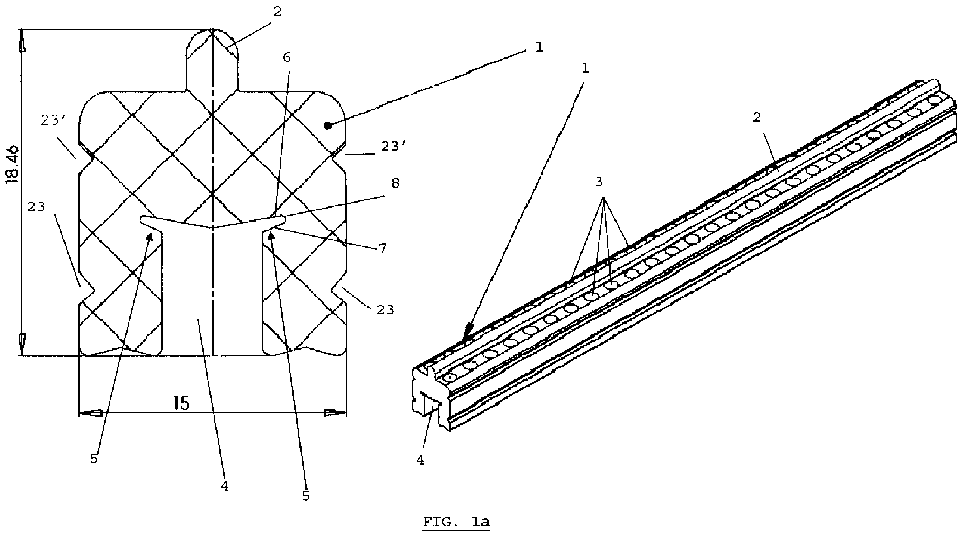

Figure 1a shows a profile, which is preferably made from a synthetic material such as Unplasticized Polyvinyl Chloride (PVC-U). The dimensions of the profile as seen in cross-section (expressed in mm) are indicated as an example, and are not limiting to the scope of the invention. The profile has a central protrusion 2 at the top, which serves as a scraper for dirt and dust. On either side of the scraper, holes 3 are provided for receiving tufts inserted in said holes. The profile is hollow : it comprises a cavity 4 that is open towards the underside of the profile. The cavity 4 extends in the longitudinal direction of the profile, along the totality of the profile's length, or at least along the portion of the profile that is configured to receive tufts.

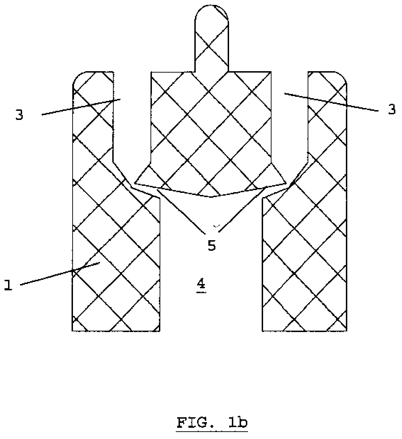

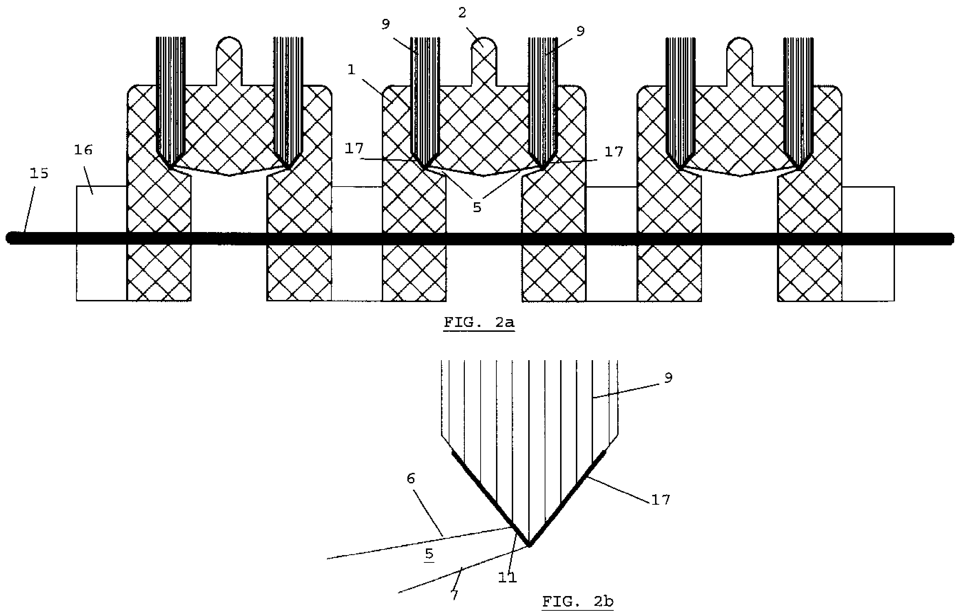

The cross-section of the cavity 4 by a plane perpendicular to the profile's longitudinal axis is preferably constant along said longitudinal axis. The shape of the cavity's cross-section is shown in detail in figure 1. At the top and on both sides of the cavity, longitudinal channels 5 are provided which preferably extend along the entire length of the cavity. The channels are a part of the cavity 4, i.e. they are themselves elongate cavities which are open towards the central cavity 4, and which are further defined by two side walls 6/7 and an end wall 8. The side walls may be parallel or slightly diverging in the direction of the central cavity 4. As shown in figure 1b, the channels 5 are located underneath the holes 3, in direct contact with said holes. In other words : at the bottom of the holes 3, which are preferably formed conically at the bottom, the interior of the holes forms a common hollow space with the channels 5, preferably with the top portion of the channels. The function of these channels 5 is explained with reference to figures 2a and 2b.

In figure 2a, three profiles 1 are shown, connected to each other to form a mat surface, the connection being made via cables 15 threaded through holes in the profiles, with spacers 16 mounted in between adjacent profiles. Between two profiles, several spacers are present, with open spaces between the spacers, to allow dirt to fall to the ground. This type of interconnection between adjacent profiles by spacers and cables is known per se. As seen in the drawing, each profile 1 has two rows of interspaced tufts 9 inserted in the holes 3. Insertion of tufts into the holes 3 can be done by applying a known technique, wherein a bunch of fibres is gripped by a metal staple 17, after which the staple is pushed or shot into the holes, so that the staple becomes inserted at the bottom of the hole and the outer ends of the fibres extend out of the hole. The staples are shown as V-shaped portions at the bottom of the hole.

Figure 2b shows a detail of the right hand channel 5 in a profile 1. The position and depth of the holes 3 is such that when the tufts 9 are inserted, they are in contact with the channels 5. According to the preferred embodiment, visualized in the detail of figure 2b, the lowest point 18 of the tuft 9 is embedded into or in contact with the lower side wall 7 of the channel 5, so that one side 19 of the tuft is in direct contact with the interior space formed by the channel 5. It is to be understood that the staple 17 shown in figure 2b does not form a separation between the tuft 9 and the channel 5, and that on either side of the staple (as seen in the plane perpendicular to the plane of the drawing), there is indeed a direct contact between the side surface 11 of the tuft and the interior of the channel 5. As in mats known in the art, water moves downward via the fibres of the tufts through combined action of capillary forces and gravity. As the fibres of a mat profile according to the invention are in contact with the capillary channels 5 of the cavity 4, they allow a more efficient water removal to the underside of the mat. When low amounts of water are accumulated at the bottom of the tufts, the water that arrives at the bottom of the tufts travels through the channels 5, in the longitudinal direction of said channels, through capillary forces exerted on the water. For this purpose, the width of the channels is designed in order for such capillary forces to be sufficiently important to ensure said longitudinal movement of water. This distribution of water in the length direction of the profile enhances the contact surface of the water with the surrounding air, and thus ensures a faster evaporation of the water. When a higher flow of water is to be evacuated, the channels serve as passageways for the water in the downward direction rather than the length direction, and water is evacuated by flowing directly downward from the channels and along the sidewalls of the cavity.

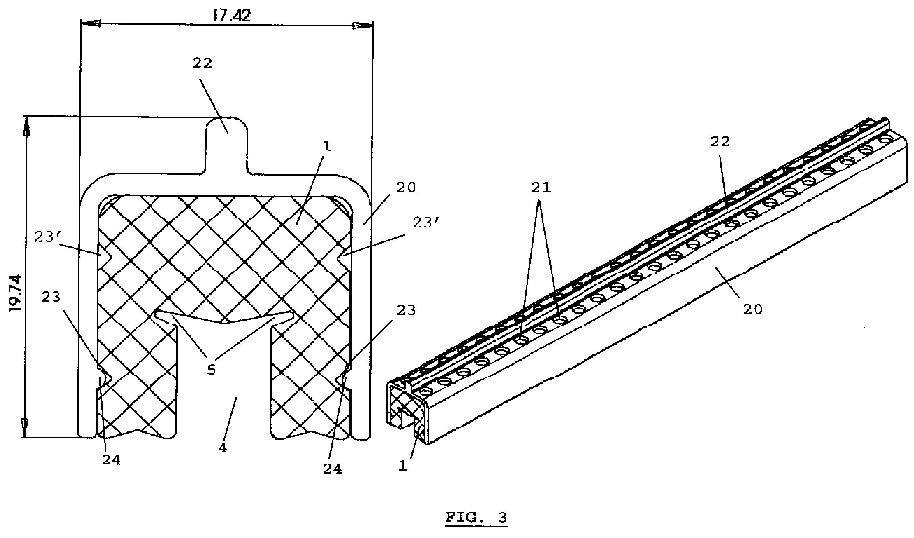

Figure 3 shows an embodiment wherein the PVC-profile is provided with an aluminium cover profile 20 that fits over the PVC-profile 1, i.e. the inner surface of the cover corresponds to the outer surface of the profile. The alu-profile is provided with holes 21 whose position corresponds to the position of the holes 3 in the PVC-profile. In this embodiment, the PVC-profile does not comprise a scraper, but the scraper 22 is part of the alu-profile. The alu-profile plays the role of protecting and reinforcing the PVC profile. Preferably the height of the scraper 22 corresponds to the height of the tufts. As seen in the drawings, the alu-profile may be fixed to the PVC-profile 1 through longitudinal grooves 23 provided in the side walls of the PVC-profiles, and longitudinal strips 24 provided on the inner side walls of the alu-profiles. When the alu-profile is pushed over the PVC-profile, the strips click into the grooves 23. The upper grooves 23' have no technical function in the profile of figure 3, but these grooves could also serve for receiving strips of the alu-profile 20.

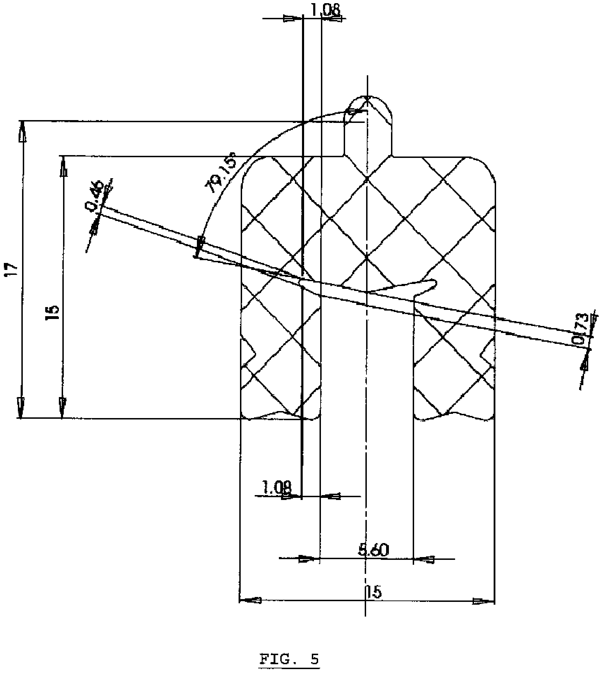

The invention is not limited to the above-described embodiments. The preferred embodiment is related to a floor mat having profiles with tufts 9 inserted in rows in the profiles 1, with a space between adjacent tufts. However, the capillary action is equally beneficial when a continuous row of tufts is inserted in a longitudinal groove of the profile, instead of in separate holes, said groove being in direct contact with a capillary channel 5. The invention is also applicable to mats wherein a brush of a given width is inserted in the profile, or a row of interspaced brushes of shorter length are inserted in separate cavities of the profile, said cavities being in direct contact with the channels 5. The latter embodiment is illustrated in figure 5. The brush or brushes 30 are inserted and clamped in suitably shaped cavities 31 according to techniques known per se in the art. Also in this embodiment, the underside of the brush 30 is in contact with the capillary channels 5.

As stated, the dimensions of the channels 5 are such that the capillary forces are sufficient to transport water in the longitudinal direction. As an example, and not limiting to the scope of the invention, figure 5 shows the dimensions (in mm) of the channels 5 in the profile of figure 1.

## Claims

1. A floor mat comprising a plurality of interconnected profiles (1) placed side by side to form the surface of the mat, each profile comprising one or more brushes (30) or tufts (9) inserted in the top surface of the profile, wherein each profile comprises an elongate cavity (4) extending in the longitudinal direction of the profile, said cavity (4) being open towards the underside of the profile, said cavity comprising one or more capillary channels (5) oriented in said longitudinal direction, said channel(s) (5) being in contact with said brushes (30) or tufts (9), **characterised in that** each profile (1) comprises at least one row of interspaced tufts (9) inserted into holes(3)in the profile or brushes (30)inserted into cavities (31) in the profile, wherein all of the tufts (9) or brushes(30) in said row are in contact with a capillary channel (5).

2. Floor mat according to claim 1, wherein said profiles are made of PVC-U.

3. Floor mat according to any one of the preceding claims, further comprising an elongate cover (20) provided over the top and side surfaces of each of the profiles (1), said cover having an interior surface that corresponds to the profile's outer surface, said cover further comprising holes (21) or cavities corresponding to the holes (3) or cavities in the profile, for passage of said tufts (9) or brushes (30) through the holes (21) or cavities of the cover (20).

4. Floor mat according to claim 3, said cover (20) further comprising elongate strips (24) on the inner side walls of the cover (20), and wherein the corresponding profile (1) comprises elongate grooves (23) in the exterior side walls of the profile, so that said strips (24) may fit into said grooves (23) when the cover and profile are assembled together.

5. Floor mat according to claim 3 or 4, wherein said cover (20) is made of aluminium.

6. Floor mat according to any one of the preceding claims, wherein said profiles (1) are connected together by one or more cables (15) threaded laterally through the profiles, and with spacers (16) being placed in between the profiles, said cables equally being threaded through said spacers.

7. Floor mat according to any one of the preceding claims, wherein said profiles (1) or said covers (20) are provided with a longitudinal scraper (2,22) on their top surface.

## Patentansprüche

1. Bodenmatte, umfassend eine Vielzahl von miteinander verbundenen Profilen (1), die nebeneinander angeordnet sind, um die Fläche der Matte zu bilden, wobei jedes Profil einen oder mehrere Bürsten (30) oder Büschel (9) umfasst, die in die obere Fläche des Profils eingeführt sind, wobei jedes Profil einen länglichen Hohlraum (4) umfasst, die sich in der Längsrichtung des Profils erstreckt, wobei der Hohlraum (4) in Richtung hin zur Unterseite des Profils offen ist, wobei der Hohlraum einen oder mehrere Kapillarkanäle (5) umfasst, die in der Längsrichtung ausgerichtet sind, wobei der Kanal/die Kanäle (5) mit den Bürsten (30) oder Büscheln (9) in Kontakt stehen, **dadurch gekennzeichnet, dass** jedes Profil (1) mindestens eine Reihe von voneinander beabstandeten Büscheln (9) umfasst, die in Löcher (3) im Profil eingeführt sind, oder Bürsten (30), die in Hohlräume (31) im Profil eingeführt sind, wobei alle der Büschel (9) oder Bürsten (30) in der Reihe in Kontakt mit einem kapillaren Kanal (5) stehen.

2. Bodenmatte nach Anspruch 1, wobei die Profile aus PVC-U hergestellt sind.

3. Bodenmatte nach einem der vorhergehenden Ansprüche, weiter umfassend eine längliche Abdeckung (20), die über der oberen und der seitlichen Fläche von jedem der Profile (1) bereitgestellt ist, wobei die Abdeckung eine innere Fläche aufweist, die der äußeren Fläche des Profils entspricht, wobei die Abdeckung weiter Löcher (21) oder Hohlräume umfasst, die den Löchern (3) oder Hohlräumen im Profil entsprechen, zum Durchgang der Büschel (9) oder Bürsten (30) durch die Löcher (21) oder Hohlräume der Abdeckung (20).

4. Bodenmatte nach Anspruch 3, wobei die Abdeckung (20) weiter längliche Streifen (24) auf den inneren Seitenwänden der Abdeckung (20) umfasst, und wobei das entsprechende Profil (1) längliche Nuten (23) in den äußeren Seitenwänden des Profils umfasst, so dass die Streifen (24) in die Nuten (23) passen können, wenn die Abdeckung und das Profil zusammengebaut sind.

5. Bodenmatte nach Anspruch 3 oder 4, wobei die Abdeckung (20) aus Aluminium hergestellt ist.

6. Bodenmatte nach einem der vorhergehenden Ansprüche, wobei die Profile (1) durch ein oder mehrere Kabel (15) verbunden sind, die seitlich durch die Profile gefädelt sind, und mit Abstandshaltern (16), die zwischen den Profilen angeordnet sind, wobei die Kabel auch durch die Abstandhalter gefädelt sind.

7. Bodenmatte nach einem der vorhergehenden Ansprüche, wobei die Profile (1) oder die Abdeckungen (20) mit einem längsgerichteten Abstreifer (2, 22) auf ihrer oberen Fläche ausgestattet sind.

## Revendications

1. Tapis de sol comprenant une pluralité de profilés (1) interconnectés placés côte à côté pour former la surface du tapis de sol, chaque profilé comprenant une ou plusieurs brosses (30) ou touffes (9) insérées dans la surface supérieure du profilé, chaque profilé comprenant une cavité (4) allongée s'étendant dans la direction longitudinale du profilé, ladite cavité (4) étant ouverte vers le côté inférieur du profilé, ladite cavité comprenant un ou plusieurs canaux (5) capillaires orientés dans ladite direction longitudinale, ledit/lesdits canaux (5) étant en contact avec lesdites brosses (30) ou touffes (9), **caractérisé en ce que**
chaque profilé (1) comprend au moins une rangée de touffes (9) espacées les unes des autres insérées dans des trous (3) dans le profilé ou de brosses (30) insérées dans des cavités (31) dans le profilé, toutes les touffes (9) ou brosses (30) dans ladite rangée étant en contact avec un canal (5) capillaire.

2. Tapis de sol selon la revendication 1, dans lequel lesdits profilés sont réalisés en PVC-U.

3. Tapis de sol selon l'une quelconque des revendications précédentes, comprenant également une couverture (20) allongée prévue sur les surfaces supérieures et latérales de chacun des profilés (1), ladite couverture ayant une surface intérieure qui correspond à la surface extérieure du profilé, ladite couverture comprenant également des trous (21) ou cavités correspondant aux trous (3) ou cavités dans le profilé, pour le passage desdites touffes (9) ou brosses (30) à travers les trous (21) ou cavités de la couverture (20).

4. Tapis de sol selon la revendication 3,
ladite couverture (20) comprenant des bandes (24) allongées sur les parois latérales intérieures de la couverture (20), et le profilé (1) correspondant comprenant des rainures (23) allongées dans les parois latérales extérieures du profilé de telle sorte que lesdites bandes (24) peuvent s'adapter dans lesdites rainures (23) quand la couverture et le profilé sont assemblés l'une à l'autre.

5. Tapis de sol selon la revendication 3 ou 4, dans lequel ladite couverture (20) est réalisée en aluminium.

6. Tapis de sol selon l'une quelconque des revendications précédentes, dans lequel lesdits profilés (1) sont connectés les uns autres par un ou plusieurs câbles (15) enfilés latéralement à travers les profilés, et des pièces d'écartement (16) étant placées entre les profilés, lesdits câbles étant également enfilés à travers lesdites pièces d'écartement (16).

7. Tapis de sol selon l'une quelconque des revendications précédentes, dans lequel lesdits profilés (1) ou lesdites couvertures (20) sont munies d'un gratte-pieds (2, 22) longitudinal sur leur surface supérieure.
